# EUROPÄISCHE PATENTSCHRIFT

(11) **EP 0 313 547 B1**
(45) Veröffentlichungstag und Bekanntmachung des Hinweises auf die Patenterteilung: **07.01.1993**
(21) Anmeldenummer: 88890257.4
(22) Anmeldetag: 12.10.1988
(51) Int. Cl.: C21C 5/56, C21C 5/36

(54) **Verfahren zum kontinuierlichen Schmelzen von Stahl**
Continuous steel melting process
Procédé de fusion continue d'acier

(30) Priorität: 13.10.1987 AT 2709/87; 10.12.1987 AT 3247/87
(43) Veröffentlichungstag der Anmeldung: 26.04.1989
(73) Patentinhaber: VOEST-ALPINE STAHL Donawitz GmbH (HRB Nr. 502), A-8700 Leoben-Donawitz (AT)
(72) Erfinder: Von Bogdandy, Ludwig Prof. Dr.-Ing. Dr.-Ing. E.h., A-4020 Linz (AT); Mitter, Gerhard, Prok. Dir. Dipl.-Ing. Dr., A-5020 Traun (AT); Köller, Otto, Dipl. Ing., A-8700 Leoben (AT); Pochmarski, Luzian, Dipl. Ing., A-8700 Leoben (AT); Jaquemar, Christian, Dipl. Ing., A-4040 Puchenau (AT); Langhammer, Hans-Jürgen, Dr.-Ing., D-2820 Platjenwerbe (DE)
(74) Vertreter: Haffner, Thomas M., Dr.

(56) Entgegenhaltungen:
- EP-A- 0 199 714
- EP-A- 0 304 413
- DE-B- 2 326 174
- DE-B- 2 710 377
- GB-A- 2 143 851
- US-A- 3 396 010
- ARCHIV FÜR DAS EISENHÜTTENWESEN, 43-Jahrgang, Heft 2, Februar 1972, Seiten 159-169, Düsseldorf; LANGHAMMER: "Verfahrenstechnische Lösungen von Schrotteinschmelzproblemen bei der Stahlerzeugung"
- STAHL UND EISEN, Band 96, Nr. 14, 15. Juli 1976, Seiten 652-657, Düsseldorf; PANTKE u. a.: "Anforderungen an die Qualität von Eisenschwamm für die Stahlerzeugung" Seite 653, Tafel 3

## Beschreibung

Die Erfindung bezieht sich auf ein Verfahren zum kontinuierlichen Schmelzen von Stahl aus zumindest weitgehend vorreduzierten Eisenträgern, wie z.B. Roheisen und/oder Schrott, bei welchem die Schmelze für nachfolgende metallurgische Schritte in eine Pfanne abgegossen wird.

Für die Stahlherstellung aus festen metallischen Eisenträgern, insbesondere Schrott, festem Roheisen, Pellets, Eisenschwamm oder Mischungen hievon, werden in der Regel Sauerstoffauf- und -durchblaskonverter eingesetzt, wobei zum Erzielen der erforderlichen Schmelzwärme kohlenstoffhaltige Brennstoffe eingeblasen werden. Die Stahlerzeugung aus Schrott, ohne Einsatz von flüssigem Roheisen gelingt ohne nennenswerte Probleme in Elektrolichtbogenöfen, jedoch ist der Aufwand für die elektrische Energie in diesen Fällen relativ hoch, so daß die Wirtschaftlichkeit derartiger Prozesse nicht ohne weiteres gegeben ist. Bei bekannten Konverterverfahren, bei denen Sauerstoff auf oder durch die Schmelze geblasen wird, kann in der Regel schneller und kostengünstiger gearbeitet werden. Solche Schmelzprozesse führen allerdings zu relativ hohen Anteilen an Oxiden im Schmelzbad und die bei derartigen Prozessen anfallende Schlacke weist in der Regel eine relativ hohe Viskosität auf. Derartig hochviskose Schlacken haben darüber hinaus zumeist eine unzureichende Gasdurchlässigkeit und es kann zu starkem Schäumen und gegebenenfalls zum Überkochen des Bades kommen.

Aus der EP-A1-0 304 413 ist bereits ein Verfahren zum Einschmelzen von Schrott, Eisenschwamm und/oder festem Roheisen od.dgl. bekanntgeworden, bei welchem die Charge ohne Kohlezusatz eingebracht wird und der Kohlenstoffgehalt im Schmelzbad durch unterstöchiometrische Verbrennung von Kohlenwasserstoffen eingestellt wird, ohne daß hiebei ein übermäßiger Anteil an Eisenoxid in der Schlacke entsteht.

Die Erfindung zielt nun darauf ab, bei einem Einschmelzvorgang der eingangs genannten Art das Verfahren so zu führen, daß übermäßige Kochreaktionen vermieden werden und die Gefahr eines Schäumens wesentlich herabgesetzt wird. Weiters zielt das erfindungsgemäße Verfahren darauf ab, die nachfolgende Feinung bzw. nachfolgende metallurgische Schritte in einer Pfanne bei Verwendung des auf diese Weise erschmolzenen Stahlbades zu erleichtern und das Eisenausbringen auch aus der Pfanne zu verbessern. Zur Lösung dieser Aufgabe besteht das erfindungsgemäße Verfahren im wesentlichen darin, daß die metallurgische Schlacke durch Zugabe von Flußmitteln auf

| |
|---|
| 20 - 77,2 % FeO, insbesondere 25,7 - 50 % FeO |
| 10 - 30 % SiO₂ |
| 2 - 15 % Al₂O₃ |
| 5 - 20 % MgO |
| 0,13 - 6,45 % MnO, insbesondere 0,5 - 5 % MnO |
| 1 - 10 % CaO |
| 0 ,1 - 5 % Cr₂O₃ |
| P + S Spuren |

mit Ausnahme einer Schlackenzusammensetzung von 10-13 SiO₂, 3-3,5 % MnO, 7-8 % Al₂O₃, 5-6 % CaO, 7-8 % MgO, 3-4 % Cr₂O₃ und bis zu 5 % übliche Verunreinigungen, Rest FeO, eingestellt wird. Dadurch, daß eine metallurgische Schlacke dieser Zusammensetzung eingestellt wird, hat sich über raschenderweise gezeigt, daß neben der bekannten Veränderung der Viskosität durch Änderung der Schlackenzusammensetzung auch die mechanische Gasdurchlässigkeit günstig beeinflußt werden kann. Es hat sich wider Erwarten gezeigt, daß durch Einstellen der Schlacke auf die oben angeführte Zusammensetzung das Aufschäumen der Schlacke bei gasbildenden metallurgischen Reaktionen unterdrückt werden. kann, wobei eine derartige Schlacke darüber hinaus die Voraussetzung bietet, nachfolgende metallurgische Schritte, wie exotherme Reaktionen und/oder die exakte Einstellung bestimmter Si-Gehalte in Stahlbad vorzunehmen.

Fe und Mn liegen in der Schlacke größtenteils in Form ihrer Monoxide FeO bzw. MnO vor.

Beim Abgießen in eine Pfanne ist es von wesentlichem Vorteil, wenn gezielte Temperaturen in der Stahlschmelze und der metallurgischen Schlacke eingestellt werden können. Zur Einstellung bestimmter Temperaturen ist es bekannt, silikothermische Reaktionen auszunützen, bei welchen notwendige Temperaturerhöhungen durch die Anwendung von FeSi erreicht werden können. Um derartige silikothermische Reaktionen jedoch ohne Gefahr eines Überschäumens und ohne Gefahr des Auftretens einer übermäßigen Kochreaktion durchführen zu können, ist es von wesentlicher Bedeutung, eine geeignete metallurgische Schlacke vorzusehen, welche in ihrer Viskosität und ihrer mechanischen Gasdurchlässigkeit auch auf nachfolgende silikothermische Schritte abgestimmt ist. Im Rahmen des erfindungsgemäßen Verfahrens ist es daher besonders vorteilhaft, wenn in der Folge so vorgegangen wird, daß der Schmelze beim Abgießen in die Pfanne exotherm reagierende Zuschläge, wie z.B. Si, Al oder exotherm reagierende Legierungen, zugesetzt werden. Durch die erfindungsgemäß vor-geschlagene Schlackenführung und die oben angegebene Schlackenzusammensetzung ist es nunmehr möglich, hohe Schlackenmengen mit einem technisch vertretbarem Pfannenvolumen zu beherrschen, wobei die Gefahr eines Überfließens der Pfannen vermieden wird.

In besonders einfacher Weise können im Rahmen des erfindungsgemäßen Verfahrens als Flußmittel Verbindungen aus dem System FeO-MgO-SiO₂, wie z.B. Olivine oder Pyroxene, zugesetzt werden, wobei vorzugsweise Forsterit, Mg-Orthosilikat oder FeOrthosilikat als Flußmittel eingesetzt werden. Auf diese Weise ergibt sich eine gezielte Beeinflussung der Viskosität und des Schmelzpunktes der Schlacke, wobei gleichzeitig eine hohe Gasdurchlässigkeit erzielt wird, welche ein Aufschäumen der Schlacke in der Pfanne vermindert. Verbindungen aus dem System FeO-MgO-SiO₂, beispielsweise Olivine oder Pyroxene, weisen an sich einen hohen Schmelzpunkt auf. Durch die Reaktion mit sehr eisenreichen sauren Schlacken ergeben sich Verbindungen mit Schmelzpunkten um 1100° bis 1200°C, wodurch bei den üblicherweise vorherrschenden Temperaturen eine niedrigviskose Schlacke mit hoher Gasdurchlässigkeit sichergestellt wird. Die Verwendung derartiger Flußmittel ergibt im Vergleich zu dem konventionellen Einsatz von Flußspat bedeutende Vorteile. Flußspat wandelt zwar gleichfalls Kalk in Kalziumsilikat um, jedoch ist die Reaktionsgeschwindigkeit bzw. Umsetzgeschwindigkeit wesentlich geringer als bei Einsatz von beispielsweise Forsterit. Die energetische günstigere Umwandlungsreaktion, wie sie sich bei der Anwendung von Magnesium und Eisenorthosilikaten ergibt, führt zu einer weitgehend neutralen Schlacke, die eine längere Standzeit der Auskleidungen gewährleistet. Die Verwendung von Silikaten, insbesondere Magnesiumorthosilikat und Eisenorthosilikat, führt im Gegensatz zur Verwendung von Flußspat nicht zur Bildung von toxischen und umweltbelastenden Gasen.

Die Verwendung von Forsterit, welcher selbst einen hohen Schmelzpunkt besitzt, führt gemeinsam mit SiO₂, CaO, FeO und Fe₂O₃ zu einer bedeutenden Herabsetzung des Schmelzpunktes, wobei die auftretende Mischungswärme voll genützt werden kann. Die Reaktion mit Silizium ergibt wiederum weitere Mengen an SiO₂, welches die Bildung von Dikalziumsilikat verzögert und ein tieferschmelzendes Monokalziumsilikat ergibt.

Insbesondere bei überfrischten Stahlschmelzen mit eisenreichen sauren Schlacken, führt die erfindungsgemäß vorgeschlagene Abänderung der Zusammensetzung der Schlacke dazu, daß in der Folge silikothermische Reaktionen bzw. exotherme Reaktionen mit geringer Neigung zum Schäumen bzw. Überkochen durchgeführt werden können. Gleichzeitig läßt sich die gewünschte Temperatur relativ präzise vorgeben und es kann mit einem geringen Ausmaß an Überhitzung im Schmelzofen vor dem Abgießen in die Pfanne gearbeitet werden. Mit Vorteil wird das Verfahren hiebei so durchgeführt, daß in die Pfanne vor dem oder während des Abgusses CaO zugegeben wird. Das in der Pfanne als Vorlage befindliche oder im Zuge des Abgießen zugesetzte CaO reagiert mit Silizium nach der nachfolgenden Gleichung

1kg Si+5,1kg FeO+4kg CaO = 4kg Fe+6,1kg (2 CaO.SiO₂)-13816 kJ

wodurch eine Erwärmung des Bades erfolgt. Durch diese Reaktion wird einerseits die Schlacke aufgeheizt, andererseits aber gleichzeitig das FeO der Schlacke, das durch unvermeidliche Eisenverbrennung im Schrottschmelzgefäß entstanden ist, zum Teil rückreduziert. Auf diese Weise wird das metallische Ausbringen verbessert. Das Metallbad kann hiebei durch Einleiten von Argon durch einen Spülstein am Pfannenboden durchmischt werden um die in der Schlacke entstehende Wärme weitgehend homogen in das Metall einzubringen und um starke Schlackenüberhitzungen, welche das Pfannenfutter angreifen könnten, zu vermeiden. Mit Vorteil werden CaO-Mengen zwischen 4 bis 16 kg/t Metall und Si-Mengen zwischen 2 und 8 kg/t Metall eingesetzt, wodurch die silikothermische Reaktion optimal ablaufen kann. Eine stöchiometrische und quantitative Umsetzung kann beispielsweise bei Einsatz von CaO und Si im Massenverhältnis von etwa 4 zu 1 erreicht werden.

Als besonders vorteilhaft wurden Schlacken der folgenden Zusammensetzungen

| |
|---|
| 54 % FeO |
| 20 % SiO₂ |
| 7 % Al₂O₃ |
| 8 % MgO |
| 3,9 % Mn |
| 4 % CaO |
| 0,8 % Cr₂O₃ |
| S + P Spuren |

aufgefunden.

Auf Grund der erfindungsgemäßen Schlackenführung kann unter Einsatz von FeSi, insbesondere unter Einsatz von FeSi(75 %), der Siliziumgehalt des Stahlbades vollständig auf die gewünschten Werte eingestellt werden, wobei mit Vorteil so vorgegangen werden kann, daß in der Stahlschmelze ein Gehalt von 0,15 % - 0,40 % Si durch Einsatz von FeSi eingestellt wird.

Insgesamt läßt sich durch die erfindungsgemäße Schlackenführung das Verfahren so durchführen, daß mit nur geringer Überhitzung, insbesondere mit einer Überhitzung von 10 bis 30°C abgegossen werden kann, wobei die Erstarrung in der Pfanne durch Zusatz exotherm reagierender Zusätze verhindert oder zumindest verzögert wird. Das schwach überhitzte Metall kann hiebei mit einer Überhitzung von 10 bis 30°C aus dem Schrottschmelzgefäß abrinnen und zusammen mit der FeO-reichen Schlacke in die Auffangpfanne abgegossen werden. Die Auffangpfanne kann auf eine Temperatur von 1500 bis 1600°C vorgeheizt werden. Die gewünschte Temperaturerhöhung für weitere sekundärmetallurgische Schritte in der Pfanne, ermöglicht es in der Folge, Schritte wie eine Entgasung, eine LF-Behandlung und ein Weiterverblasen im Konverter mit oder ohne Roheisenzugabe vorzunehmen. Während des Füllvorganges der Pfanne kann FeSi(75 %) und Kalk abgestuft zugesetzt werden oder aber so vorgegangen werden, daß Kalk als Vorlage in die leere Pfanne eingebracht wird und kontinuierlich FeSi(75 %) zugesetzt wird.

## Patentansprüche

1. Verfahren zum kontinuierlichen Schmelzen von Stahl aus zumindest weitgehend vorreduzierten Eisenträgern, wie z.B. Roheisen und/oder Schrott, bei welchem die Schmelze für nachfolgende metallurgische Schritte in eine Pfanne abgegossen wird, dadurch gekennzeichnet, daß die metallurgische Schlacke durch Zugabe von Flußmitteln auf
| |
|---|
| 20 - 77,2 % FeO, insbesondere 25,7 - 50 % FeO |
| 10 - 30 % SiO₂ |
| 2 - 15 % Al₂O₃ |
| 5 - 20 % MgO |
| 0,13 - 6,45 % MnO, insbesondere 0,5 - 5 % MnO |
| 1 - 10 % CaO |
| 0,1 - 5 % Cr₂O₃ |
| P + S Spuren |
mit Ausnahme einer Schlackenzusammensetzung von 10-13 SiO₂, 3-3,5 % MnO, 7-8 % Al₂O₃, 5-6 % CaO, 7-8 % MgO, 3-4 % Cr₂O₃ und bis zu 5 % übliche Verunreinigungen, Rest FeO, eingestellt wird.

2. Verfahren nach Anspruch 1, dadurch gekennzeichnet, daß der Schmelze beim Abgießen in die Pfanne exotherm reagierende Zuschläge, wie z.B. Si, Al oder exotherm reagierende Legierungen, zugesetzt werden.

3. Verfahren nach Anspruch 1 oder 2, dadurch gekennzeichnet, daß als Flußmittel Verbindungen aus dem System FeO-MgO-SiO₂, wie z.B. Olivine oder Pyroxene, zugesetzt werden .

4. Verfahren nach Anspruch 1, 2 oder 3, dadurch gekennzeichnet, daß als Flußmittel zur Einstellung der Schlackenzusammensetzung Forsterit, Mg-Orthosilikat oder Fe-Orthosilikat eingesetzt wird.

5. Verfahren nach einem der Ansprüche 1 bis 4, dadurch gekennzeichnet, daß die Schmelze mit einer Uberhitzung von 10 - 30°C abgegossen wird und die Erstarrung in der Pfanne durch Zusatz exotherm reagierender Zusätze verhindert wird.

6. Verfahren nach einem der Ansprüche 1 bis 5, dadurch gekennzeichnet, daß in die Pfanne vor dem oder während des Abgusses CaO zugegeben wird.

7. Verfahren nach einem der Ansprüche 1 bis 6, dadurch gekennzeichnet, daß eine Schlacke der Zusammensetzung
| |
|---|
| 54 % FeO |
| 20 % SiO₂ |
| 7 % Al₂O₃ |
| 8 % MgO |
| 3, 9 % MnO |
| 4 % CaO |
| 0,8 % Cr₂O₃ |
| S + P Spuren |
eingestellt wird.

8. Verfahren nach einem der Ansprüche 1 bis 7, dadurch gekennzeichnet, daß in der Stahlschmelze ein Gehalt von 0,15% bis 0,40% Si durch Einsatz von FeSi eingestellt wird.

## Claims

1. A process for the continuous melting of steel from at least substantially pre-reduced iron carriers, for example pig iron and/or scrap, in which the melt is poured off into a ladle for subsequent metallurgical steps, characterised in that the metallurgical slag is adjusted by the addition of fluxes to
| |
|---|
| 20 - 77.2 % FeO, in particular 25.7 - 50 % FeO |
| 10 - 30 % SiO₂ |
| 2 - 15 % Al₂O₃ |
| 5 - 20 % MgO |
| 0.13 - 6.45 % MnO, in particular 0.5 - 5 % MnO |
| 1 - 10 % CaO |
| 0.1 - 5 % Cr₂O₃ |
| P + S traces |
with the exception of a slag composition of 10-13 SiO₂, 3-3.5 % MnO, 7-8 % Al₂O₃, 5-6 % CaO, 7-8 % MgO, 3-4 % Cr₂O₃ and up to 5 % of the usual impurities, the remainder FeO.

2. A process according to Claim 1, characterised in that, while it is being poured off into the ladle, exothermically reacting additives, such as Si, Al or exothermically reacting alloys, are added to the melt.

3. A process according to Claim 1 or 2, characterised in that compounds from the system FeO-MgO-SiO₂, for example olivine or pyroxene, are added as flux.

4. A process according to Claim 1, 2 or 3, characterised in that forsterite, Mg-orthosilicate or Fe-orthosilicate is used as flux for adjusting the slag composition.

5. A process according to any one of Claims 1 to 4, characterised in that the melt is poured off while being overheated by 10 - 30 °C and solidification in the ladle is prevented by adding exothermically reacting additives.

6. A process according to any one of Claims 1 to 5, characterised in that CaO is added to the ladle before or during the pouring-off.

7. A process according to any one of Claims 1 to 6, characterised in that a slag with the composition
| |
|---|
| 54 % FeO |
| 20 % SiO₂ |
| 7 % Al₂O₃ |
| 8 % MgO |
| 3.9 % MnO |
| 4 % CaO |
| 0.8 % Cr₂O₃ |
| S + P traces |
is adjusted.

8. A process according to any one of Claims 1 to 7, characterised in that in the steel melt a content of 0.15 % to 0.40 % Si is adjusted by a charge of FeSi.

## Revendications

1. Procédé de fusion continue d'acier obtenu à partir de matériaux ferreux comme, par exemple, de la fonte et/ou de la ferraille, au moins fortement pré-réduits, dans lequel le bain fondu destiné à subir des étapes métallurgiques ultérieures est coulé dans une poche, caractérisé en ce que, par addition de fondants, on ajuste la composition suivante du laitier métallurgique :
| |
|---|
| - 20 à 77,2 % FeO, notamment 25,7 à 50 % FeO ; |
| - 10 à 30 % SiO₂ ; |
| - 2 à 15 % Al₂O₃ ; |
| - 5 à 20 % MgO ; |
| - 0,13 à 6,45 % MnO, notamment 0,5 à 5 % MnO ; |
| - 1 à 10 % CaO ; |
| - 0,1 à 5 % Cr₂O₃ ; |
| - P + S : traces ; |
à l'exception d'une composition de laitier contenant 10 à 13 % SiO₂, 3 à 3,5 % MnO, 7 à 8 % Al₂O₃, 5 à 6 % CaO, 7 à 8 % MgO, 3 à 4 % Cr₂O₃ et jusqu'à 5 % d'impuretés habituelles, le reste étant FeO.

2. Procédé selon la revendication 1, caractérisé en ce qu'on ajoute au bain fondu, lors de sa coulée dans la poche, des additions à réaction exothermique, par exemple Si, Al ou des alliages à réaction exothermique.

3. Procédé selon la revendication 1 ou 2, caractérisé en ce qu'on ajoute comme fondants des combinaisons comprises dans le système FeO-MgO-SiO₂, comme, par exemple, de l'olivine ou du pyroxène.

4. Procédé selon la revendication 1, 2 ou 3, caractérisé en ce qu'on utilise comme fondants pour l'ajustement de la composition du laitier, de la forstérite, de l'orthosilicate de Mg ou de l'orthosilicate de Fe.

5. Procédé selon l'une des revendications 1 à 4, caractérisé en ce qu'on coule le bain fondu avec un exès de température de 10 à 30°C et qu'on évite la solidification dans la poche par une addition d'additifs à réaction exothermique.

6. Procédé selon l'une des revendications 1 à 5, caractérisé en ce qu'on ajoute de la CaO dans la poche pendant ou avant la coulée.

7. Procédé selon l'une des revendications 1 à 6, caractérisé en ce qu'on ajuste la composition suivante du laitier :
| |
|---|
| - 54 % FeO ; |
| - 20 % SiO₂ ; |
| - 7 % Al₂O₃ ; |
| - 8 % MgO ; |
| - 3,9 % MnO ; |
| - 4 % CaO ; |
| - 0,8 % Cr₂O₃ ; |
| - S + P : traces. |

8. Procédé selon une des revendications 1 à 7, caractérisé en ce qu'on ajuste le bain d'acier fondu sur une teneur de 0,15 a 0,40 % Si par addition de FeSi.
